(19) Europäisches Patentamt
European Patent Office
Office européen des brevets

(11) EP 2 570 761 A1

(12) **DEMANDE DE BREVET EUROPEEN**

(43) Date de publication:
20.03.2013 Bulletin 2013/12

(51) Int Cl.:
*F41A 17/08* (2006.01)  *F41J 5/00* (2006.01)

(21) Numéro de dépôt: 12184566.3

(22) Date de dépôt: 14.09.2012

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR
Etats d'extension désignés:
BA ME

(30) Priorité: 15.09.2011 FR 1158234

(71) Demandeur: **Commissariat à l'Énergie Atomique et aux Énergies Alternatives**
**75015 Paris (FR)**

(72) Inventeur: **Aubouy, Miguel**
**38000 Grenoble (FR)**

(74) Mandataire: **Colombo, Michel et al**
**Brevinnov**
**324, rue Garibaldi**
**69007 Lyon (FR)**

(54) **Procédé de détection d'un point d'impact sur une cible réelle mobile**

(57)    Ce procédé de détection d'un point d'impact sur une cible réelle mobile comprend :

a) l'enregistrement (54) d'une première équation définissant une surface finie prédéterminée $S_C$ apte à recouvrir au moins une partie de la cible,

b) l'enregistrement (52) d'une seconde équation définissant la trajectoire d'un projectile ou d'un faisceau tiré par une arme légère ou un cylindre $S_D$ centré sur cette trajectoire,

c) la mesure (62) des coordonnées du point de la cible à l'aide d'un capteur électronique,

d) la recherche (64) d'un point d'intersection entre la surface $S_C$ et la trajectoire du projectile ou du faisceau, ou entre les surfaces $S_C$ et $S_D$, en utilisant la seconde équation enregistrée et la première équation enregistrée, et

e) l'indication (68) de l'existence d'un point d'impact si au moins un point d'intersection a été trouvé et, dans le cas contraire, l'indication (66) de l'absence de point d'impact.

Fig. 3

**Description**

L'invention concerne un procédé de détection d'un point d'impact d'un projectile ou d'un faisceau, tiré par une arme légère, sur une cible réelle mobile ainsi qu'un procédé de protection d'une cible mobile et un procédé de simulation de tir sur une cible réelle mobile. L'invention a également pour objet un support d'enregistrement d'informations, une arme et un équipement de cible pour la mise en oeuvre de ces procédés.

Les procédés de détection de point d'impact sur une cible sont utilisés dans de nombreuses applications dont notamment la protection des personnes ou dans les jeux de simulation de tirs.

Par exemple, la demande de brevet française FR 2 790 547 décrit un tel procédé de détection d'un point d'impact sur un chasseur. Dans cette demande de brevet, le chasseur est équipé d'un émetteur omnidirectionnel d'ondes électromagnétiques et l'arme est équipée d'un capteur directionnel de ces ondes électromagnétiques. L'axe de mesure du capteur directionnel est aligné sur l'axe du canon de l'arme. Ainsi, si le capteur directionnel détecte les ondes électromagnétiques émises par l'émetteur, cela signifie que le chasseur se situe dans l'axe du canon et donc qu'un tir peut provoquer un point d'impact sur ce chasseur. Plus précisément, le capteur directionnel détecte un point d'impact sur le chasseur dès que l'émetteur omnidirectionnel se trouve à l'intérieur d'un cône de détection. Le sommet de ce cône de détection est confondu avec l'arme et son axe de révolution est confondu avec la ligne de visée de l'arme. La section transversale de ce cône de détection augmente au fur et à mesure que l'on s'éloigne de l'arme dans la direction où celle-ci pointe.

Toutefois, ce procédé peut conduire à des détections erronées de points d'impact sur le chasseur ou, au contraire, à l'absence de détection de point d'impact sur le chasseur alors que si un tir était déclenché le chasseur serait touché.

Par exemple, lorsque le chasseur est éloigné de l'arme, la section transversale du cône de détection est beaucoup plus large que la section transversale réelle occupée par le chasseur. Ainsi, cela conduit à de fausses détections de point d'impact sur le chasseur.

A l'inverse, si le chasseur se situe très près de l'arme, une partie ce son corps peut être sur l'axe du canon de l'arme tandis que l'émetteur omnidirectionnel est en dehors du cône de détection. Dans ces conditions, un tir à bout portant pourrait blesser le chasseur car aucun point d'impact n'a été détecté.

De l'état de la technique est également connu de :

- US4218834B,
- EP1688697A1.

L'invention vise donc à proposer un procédé plus efficace de détection d'un point d'impact sur une cible mobile située à proximité de l'arme. Elle a donc pour objet un premier mode de réalisation conforme à la revendication 1 et un second mode de réalisation conforme à la revendication 4.

Dans les procédés ci-dessus, les dimensions associées à la cible ne dépendent pas nécessairement de la distance qui sépare cette cible de l'arme. De plus, contrairement à des capteurs de position utilisant un faisceau laser qui balaye l'environnement autour de l'arme, l'utilisation d'ondes électromagnétique modulées en UWB ou de champ magnétique permet de localiser précisément le point de la cible même lorsque la cible est à proximité de l'arme. Ainsi, même si la cible est proche de l'arme, le point d'impact peut être détecté de façon fiable. En particulier, grâce à ce procédé, il est possible de détecter de façon fiable un tir à bout portant sur la cible.

A cause de l'utilisation d'ondes électromagnétiques ou de champ magnétique, il est possible de déterminer précisément les coordonnées de la cible même si la cible est en partie cachée par un objet transparent aux ondes électromagnétiques ou au champ magnétique. Ainsi, la partie du capteur de position portée par la cible peut facilement être dissimulée sous les vêtements de la cible, ce qui rend difficilement décelable la mise en oeuvre du procédé.

La détection erronée de point d'impact lorsque la cible est éloignée est également limitée.

Ces procédés permettent également de détecter le point d'impact avant que le tir ne soit déclenché.

Enfin, ces procédés peuvent détecter des points d'impact sur toute la longueur de la trajectoire du projectile ou du faisceau. Ainsi, ce procédé s'applique aux tirs tendus aussi bien qu'aux tirs balistiques. Par « tir tendu », on désigne un tir où l'impact avec la cible se produit sur la partie rectiligne de la trajectoire colinéaire avec la ligne de visée. Pour un tir tendu, l'effet de la pesanteur est négligeable. A l'inverse, par « tir balistique » on désigne un tir où l'impact avec la cible se fait sur une partie de la trajectoire du projectile où celui-ci décrit une parabole sous l'effet de la force de pesanteur.

Les modes de réalisation de ce procédé de détection peuvent comporter une ou plusieurs des caractéristiques des revendications dépendantes.

Ces modes de réalisation du procédé de détection présentent en outre les avantages suivants :

- mesurer l'orientation de la cible permet de définir plus précisément la surface $S_c$ ;

- utiliser un repère lié sans aucun degré de liberté à l'arme permet d'éviter d'avoir à mesurer la direction de la ligne de visée ;
- utiliser un repère lié sans aucun degré de liberté à la cible permet d'éviter d'avoir à mesurer la position de la cible.

L'invention a également pour objet un procédé de protection d'une cible réelle mobile contre des tirs conforme à la revendication 7.

L'invention a aussi pour objet un support d'enregistrement d'informations comportant des instructions pour l'exécution d'un des procédés ci-dessus, lorsque ces instructions sont exécutées par un calculateur électronique.

L'invention a également pour objet une arme pour la mise en oeuvre des procédés ci-dessus.

Enfin, l'invention a également pour objet un équipement de cible pour la mise en oeuvre des procédés ci-dessus.

L'invention sera mieux comprise à la lecture de la description qui va suivre, donnée uniquement à titre d'exemple non limitatif et faite en se référant aux dessins sur lesquels :

- la figure 1 est une illustration schématique d'un système d'armement,
- la figure 2 est une illustration schématique d'un premier mode de réalisation d'un appareil de protection d'une cible mis en oeuvre dans le système de la figure 1,
- la figure 3 est un organigramme d'un procédé de protection d'une cible, mis en oeuvre dans le système de la figure 1,
- la figure 4 est une illustration schématique d'un second mode de réalisation de l'appareil de protection d'une cible,
- la figure 5 est un organigramme d'un procédé de protection d'une cible mobile à l'aide de l'appareil de la figure 4,
- la figure 6 est une illustration schématique d'un troisième mode de réalisation de l'appareil de protection d'une cible,
- la figure 7 est un organigramme d'un procédé de protection d'une cible à l'aide de l'appareil de la figure 6,
- la figure 8 est une illustration schématique d'un simulateur de tirs, et
- la figure 9 est une illustration schématique d'un procédé de fonctionnement du simulateur de la figure 8.

Dans ces figures, les mêmes références sont utilisées pour désigner les mêmes éléments.

Dans la suite de cette description, les caractéristiques et fonctions bien connues de l'homme du métier ne sont pas décrites en détail.

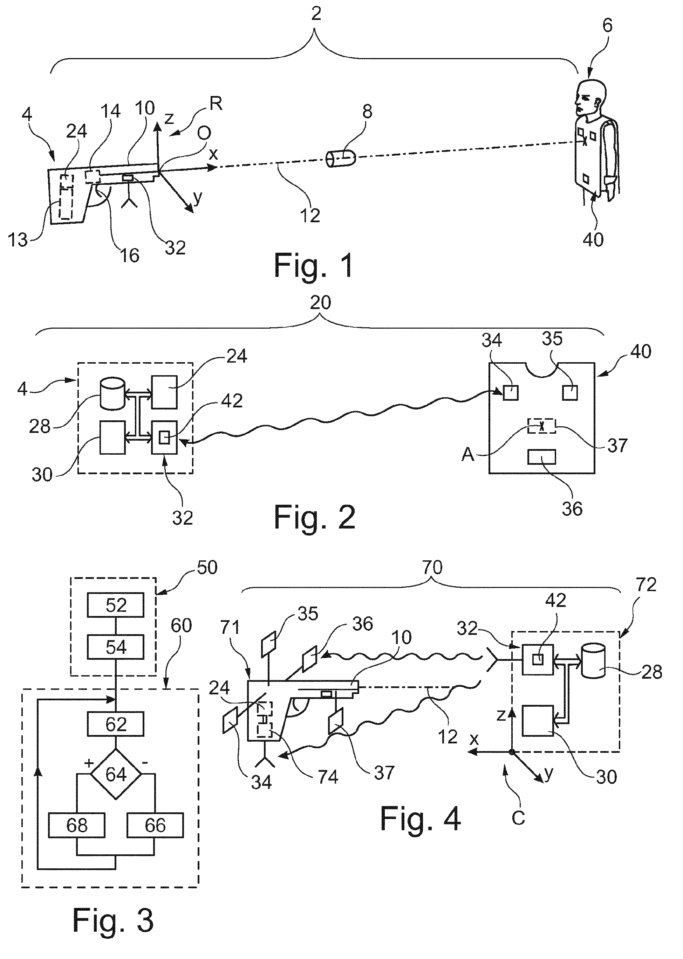

La figure 1 représente un système 2 d'armement comportant une arme 4 susceptible de tirer un projectile ou un faisceau sur une cible réelle mobile 6.

Le projectile ou le faisceau est conçu pour heurter la cible en un point appelé ici point d'impact. Dans ce mode de réalisation, la cible est un être humain et le projectile ou le faisceau est conçu pour blesser cet être humain au niveau du point d'impact. Lorsqu'il s'agit d'un projectile, la blessure est causée par l'impact de ce projectile sur la peau. Dans le cas d'un faisceau, tel qu'un faisceau laser, la blessure est le plus souvent une brûlure au niveau du point d'impact.

L'arme 4 est une arme légère, c'est-à-dire suffisamment légère pour pouvoir être portée et utilisée par un seul être humain à l'aide d'une ou deux mains. Typiquement il s'agit d'une arme de poing tel qu'un revolver ou d'une arme d'épaule tel qu'un fusil.

La suite de cette description est faite dans le cas particulier où l'arme 4 est une arme de poing et une arme à feu. Dans ce cas, le projectile est une balle 8 de diamètre D.

L'arme 4 comprend :

- un canon 10 qui s'étend le long d'une ligne de visée 12,
- un réservoir 13 de munitions contenant une ou plusieurs balles 8,
- un mécanisme 14 de mise à feu susceptible d'embraser un mélange détonant pour provoquer une déflagration qui propulse la balle 8 dans le canon à une vitesse subsonique, et
- une détente 16 qui permet au tireur de déclencher manuellement le tir.

La ligne de visée 12 correspond à la direction dans laquelle est tiré le projectile. La direction indique également le sens dans lequel est tiré ce projectile.

Le mécanisme 14 de mise à feu est par exemple apte à générer une décharge électrique qui fournit l'énergie nécessaire au mélange détonant pour déclencher sa déflagration.

La détente 16 est ici une interface homme-machine solidaire de l'arme 4 et déplaçable manuellement par un être humain entre :

- une position de repos dans laquelle le tir n'est pas déclenché, et
- une position enfoncée dans laquelle elle transmet une commande de mise à feu au mécanisme 14 pour déclencher immédiatement le tir.

Typiquement, la détente prend la forme d'une pièce mécanique déplaçable entre ces deux positions par un doigt du tireur.

Le système 2 est équipé d'un appareil de protection de la cible 6 contre les tirs de cette arme 4. Cet appareil est représenté plus en détail sur la figure 2 et désigné par la référence 20. Dans cette figure, pour simplifier l'illustration, l'arme 4 est représentée par un carré en pointillé.

L'appareil 20 comprend :

- un dispositif de détection d'un point d'impact sur la cible 6, et
- un mécanisme 24 d'inhibition de la mise à feu susceptible d'empêcher le tir même si le tireur appuie sur la détente 16.

Le dispositif de détection d'un point d'impact comprend ici :

- un capteur de la position d'un point A de la cible 6 dans un repère R (figure 1) de l'arme 4,
- une mémoire 28,
- un calculateur électronique 30 programmable apte à exécuter des instructions enregistrées sur un support d'enregistrement d'informations, c'est-à-dire ici la mémoire 28.

Le repère R est défini par trois axes X, Y, Z orthogonaux entre eux. L'axe X est confondu avec la ligne de visée 12 et orienté en direction de la cible. La trajectoire de la balle 8 dans le repère R est connue à l'avance. Ici, la trajectoire est fixe est correspond à l'axe X du repère R. A cet effet, l'origine O qui se trouve à l'intersection de ces trois axes est fixée sans aucun degré de liberté à l'extrémité du canon de l'arme 4.

La mémoire 28 contient notamment les instructions et les données nécessaires à l'exécution du procédé de la figure 3 par le calculateur 30.

Le capteur de position mesure les coordonnées $x_A$, $y_A$ et $z_A$ du point A dans le repère R. Dans ce mode de réalisation, il comprend à cet effet :

- un émetteur-récepteur 32 fixé sans aucun degré de liberté à l'arme 4,
- au moins quatre réflecteurs 34 à 37 fixés sans aucun degré de liberté sur un gilet 40 porté par la cible 6.

L'émetteur-récepteur 32 émet et reçoit des ondes électromagnétiques modulées selon la technologie UWD (Ultra Wideband). Cet émetteur-récepteur comprend un module 42 de calcul de temps de parcours. Ce module 42 mesure le temps que met chaque onde électromagnétique émise par cet émetteur pour parcourir la distance entre l'émetteur 32 et chaque réflecteur 34 à 37. Ce module 42 convertit ensuite le temps de parcours mesuré en distance $d_i$ à partir de la vitesse connue de propagation des ondes électromagnétiques émises, où l'indice i identifie le réflecteur sur lequel les ondes électromagnétiques ont été réfléchies. Ainsi, ce module 42 mesure donc quatre distances $d_1$ à $d_4$. Les distances $d_1$ à $d_4$ correspondent respectivement aux réflecteurs 34 à 37. Ensuite, ce module 42 transforme ces distances $d_i$ en coordonnées du point A. Le point A dont les coordonnées sont mesurées est par exemple le barycentre des réflecteurs 34 à 37 calculé en prenant, par exemple, des poids égaux pour chaque réflecteur.

Les réflecteurs 34 à 37 réfléchissent vers l'émetteur-récepteur 32 les ondes électromagnétiques émises. Trois de ces réflecteurs 34 à 36 sont disposés dans un même plan et le quatrième est disposé en dehors de ce plan pour éviter toute ambiguïté sur la détermination de la position de la cible et de son orientation. De préférence, les réflecteurs qui sont dans le même plan sont espacés l'un de l'autre d'au moins 20 ou 40 cm. Ici, ces réflecteurs 34 à 37 sont fixés sans aucun degré de liberté sur le gilet 40 porté par la cible 6. Par exemple, un réflecteur 34, 35 est placé sur chaque épaule, un autre réflecteur 36 est placé au niveau du ventre et enfin un dernier réflecteur 37 est placé au milieu du dos lorsque la cible 6 porte ce gilet.

Le mécanisme 24 d'inhibition de la mise à feu est basculable sous la commande du calculateur 30 entre un état actif et un état passif. Dans l'état actif, il inhibe systématiquement le déclenchement du tir. Dans l'état passif, le tir peut être déclenché en appuyant sur la détente 16.

Par exemple, ce mécanisme 24 empêche mécaniquement, en réponse à une commande d'inhibition, le déplacement de la détente 16 vers sa position enfoncée ou inhibe la génération de la décharge électrique par le mécanisme 14 de mise à feu de sorte que même si la détente 16 est dans sa position enfoncée, le tir n'est pas déclenché.

Comme représenté sur la figure 2, la mémoire 28, le calculateur 30 et l'émetteur-récepteur 32 sont fixés sur l'arme 4. Plus précisément, ils sont reçus à l'intérieur d'un logement aménagé dans l'arme 4 et refermé par un couvercle résistant à toute tentative d'arrachage avec les mains ou à l'aide d'une pince. De préférence, ce couvercle est fermé par des vis ayant une tête qui ne s'adapte pas à la pointe d'un tournevis standard.

Le fonctionnement de l'appareil 20 va maintenant être décrit plus en détail en référence au procédé de la figure 3.

Ce procédé débute par une phase 50 d'initialisation. Cette phase 50 débute par une étape 52 d'enregistrement dans la mémoire 28 d'une équation d'un cylindre $S_D$ qui s'étend depuis l'extrémité du canon 10 jusqu'à l'infini le long de la ligne de visée 12. Ici, le cylindre $S_D$ est un cylindre de révolution de rayon $r_p$. Le rayon $r_p$ est compris entre D/2 et β*D/2, où D est le diamètre de la balle 8 et β est une constante strictement supérieure à un et inférieure à 100, 10 ou 3. Par exemple, le rayon $r_p$ est ici compris entre 1 et 10 cm. Ici, il est pris égal à 5 cm. L'équation du cylindre $S_D$ dans le repère R est par exemple donnée par la relation suivante :

$$(1) \qquad y^2 + z^2 = r_p^2 \text{ et } x \geq 0$$

Lors d'une étape 54, une équation définissant une surface $S_c$ est enregistrée dans la mémoire 28. La surface $S_c$ est associée dans la mémoire 28 au point A. Plus précisément, la position de cette surface $S_c$ dans le repère R est définie par la position du point A. Ici, cette surface $S_c$ délimite un volume qui englobe le point A. Dans ce mode de réalisation particulier, elle englobe également la majorité du volume de la cible 6. Par exemple, la surface $S_c$ est une sphère centrée sur le point A de rayon $r_c$. Typiquement, dans ce mode de réalisation, le rayon $r_c$ est supérieur à 50 cm ou 1 m.

L'équation de la surface $S_c$ contient des paramètres destinés à être remplacés par des valeurs fonction des coordonnées $x_A$, $y_A$, $z_A$ mesurées du point A. Ici, ces paramètres sont égaux, respectivement, aux coordonnées $x_A$, $y_A$, $z_A$. Il sont donc également notés $x_A$, $y_A$, $z_A$. De préférence, la surface $S_c$ est indépendante de la distance qui sépare le point A de l'arme 4. Par exemple, l'équation de la surface $S_c$ est la suivante :

$$(2) \qquad (x - x_A)^2 + (y - y_A)^2 + (z - z_A)^2 = r_c^2$$

Le rayon $r_c$ définissant la surface $S_c$ est également enregistré dans la mémoire 28 lors de cette phase d'initialisation.

Une fois l'appareil 20 initialisé, il est alors possible de procéder à une phase 60 d'utilisation. Lors d'une étape 62, le capteur de position mesure en permanence, les coordonnées $x_A$, $y_A$, $z_A$ du point A dans le repère R. Pour cela, l'émetteur-récepteur 32 émet des ondes électromagnétiques qui sont réfléchies par les réflecteurs 34 à 37. Le module 42 mesure le temps de parcours entre l'émetteur 32 et ces réflecteurs 34 à 37 et en déduit les distances $d_1$ à $d_4$. A partir de ces distances $d_1$ à $d_4$, il calcule les coordonnées $x_A$, $y_A$, $z_A$ du point A dans le repère R.

Lors d'une étape 64, le calculateur 30 acquiert les coordonnées mesurées par le capteur de position puis recherche s'il existe au moins un point d'intersection entre les surfaces $S_D$ et $S_C$. Pour cela, le calculateur 30 remplace les paramètres $x_A$, $y_A$, $z_A$ dans l'équation (2) par les valeurs mesurées de ces paramètres lors de l'étape 62 pour obtenir ainsi une équation paramétrée.

Ensuite, il recherche une solution au système d'équations formé par la réunion de l'équation (1) et de l'équation (2) paramétrée avec les coordonnées $x_A$, $y_A$, $z_A$. Ce système d'équations peut admettre un seul point d'intersection, une infinité de points d'intersection ou aucun point d'intersection.

Si aucun point d'intersection n'a été trouvé, lors d'une étape 66, le calculateur 30 commande le mécanisme 24 pour le faire basculer dans l'état inactif. Ainsi, l'arme 4 reste utilisable contre tout autre objet que la cible 6.

Si au contraire, au moins un point d'intersection entre les surfaces $S_D$ et $S_C$ a été trouvé, lors d'une étape 68, le calculateur 30 commande le mécanisme 24 pour le faire immédiatement basculer dans l'état actif. Ainsi, dès que l'arme 4 est pointée sur la cible 6, aucun tir à partir de cette arme 4 sur la cible 6 ne peut être déclenché. La cible est donc efficacement protégée.

Un tel appareil de protection est particulièrement efficace pour empêcher qu'une arme dérobée par exemple à un vigile, soit utilisée contre lui.

La figure 4 représente un appareil 70 de protection de la cible 6 contre les tirs d'une arme 71. Cet appareil 70 est identique à l'appareil 20 sauf que :

- le calculateur 30, l'émetteur-récepteur 32 et la mémoire 28 sont localisés dans un boîtier 72 porté par la cible 6,
- les quatre réflecteurs 34 à 37 sont fixés sans aucun degré de liberté sur l'arme 4.

Ici, les réflecteurs 34 à 36 sont fixés dans un plan perpendiculaire à la ligne de visée 12 et le réflecteur 37 est situé en avant de ce plan dans la direction où l'arme est pointée.

L'arme 71 comprend également un émetteur-récepteur 74 raccordé au mécanisme 24 d'inhibition de mise à feu.

Dans ce mode de réalisation, la combinaison des réflecteurs 34 à 37 et de l'émetteur-récepteur 32 forme un capteur des coordonnées de l'arme 71 et de la direction de la ligne de visée 12 dans un repère C fixé sans aucun degré de liberté au boîtier 72. Puisque quatre réflecteurs sont utilisés, le sens dans lequel l'arme 71 pointe est mesuré.

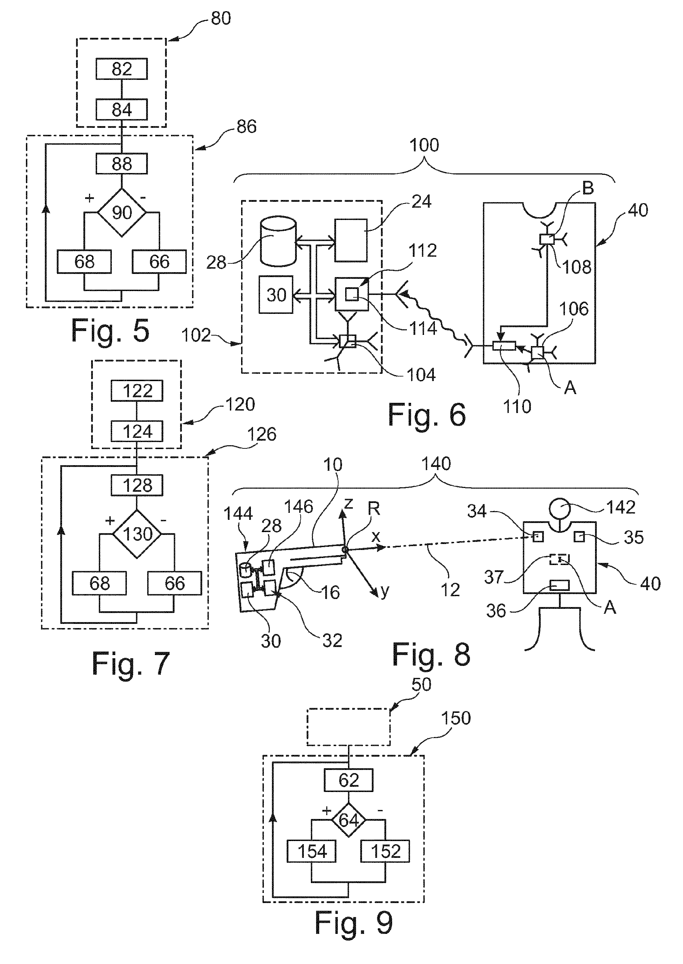

Le fonctionnement de l'appareil 70 va maintenant être décrit plus en détail en référence au procédé de la figure 5. Le procédé de la figure 5 débute par une phase d'initialisation 80. Cette phase 80 est similaire à la phase 50 et comporte également deux étapes 82 et 84. L'étape 82 est identique à l'étape 52 sauf que l'équation du cylindre $S_D$ enregistrée contient des paramètres destinés à être remplacés par l'orientation de la ligne de visée 12. Par exemple, l'orientation de la ligne de visée est donnée par des paramètres $\theta_X$, $\theta_Y$ et $\theta_Z$ donnant l'inclinaison de cette ligne de visée par rapport, respectivement, aux axes X, Y et Z du repère C. L'équation du cylindre $S_D$ comporte également des paramètres destinés à être remplacés par les coordonnées $x_m$, $y_m$ et $z_m$ de l'arme 71 dans le repère C.

L'étape 84 est identique à l'étape 54 sauf que l'équation enregistrée de la surface $S_C$ ne contient pas les paramètres $x_A$, $y_A$, $z_A$ destinés à être remplacés par la position mesurée de la cible. En effet, dans ce mode de réalisation, la position de la cible dans le repère C est connue à l'avance. Ici cette position est fixe.

Une fois la phase d'initialisation terminée, on procède à une phase 86 d'utilisation de l'appareil 70. Lors d'une étape 88, la position de l'extrémité du canon 10 et l'orientation de la ligne de visée 12 sont mesurées à l'aide de l'émetteur-récepteur 32 et des réflecteurs 34 à 37.

Lors d'une étape 90, le calculateur 30 acquiert les valeurs mesurées des paramètres $x_m$, $y_m$, $z_m$ et $\theta_x$, $\theta_y$ et $\theta_z$ puis recherche s'il existe un point d'intersection entre les surfaces $S_D$ et $S_C$. Pour cela, il remplace les paramètres $x_m$, $y_m$, $z_m$ et les paramètres $\theta_x$, $\theta_y$ et $\theta_z$ par les valeurs mesurées lors de l'étape 88 pour obtenir une équation paramétrée de la surface $S_D$. Ensuite, le calculateur 30 recherche s'il existe au moins une solution au système d'équations formé par l'équation de la surface $S_C$ et l'équation paramétrée de la surface $S_D$. S'il n'existe aucun point d'intersection, il procède à l'étape 66. Dans le cas contraire, il procède à l'étape 68. Ces étapes ont précédemment été décrites au regard de la figure 3. Toutefois ici, lors de l'étape 68, l'instruction d'inhibition du mécanisme 24 est reçue par l'intermédiaire de l'émetteur-récepteur 74.

La figure 6 représente un appareil 100 de protection de la cible 6 contre les tirs d'une arme 102. Cet appareil 100 est identique à l'appareil 20 sauf que le capteur de position de la cible 6 dans le repère R est réalisé différemment.

Plus précisément, une source magnétique triaxiale 104 est logée à l'intérieur de l'arme 102. Cette source 104 est une source qui émet des champs magnétiques selon trois directions d'émission non parallèles entre elles et sécantes en un point central. Ici ces directions d'émission sont orthogonales entre elles et, par exemple, parallèles, respectivement, aux axes X, Y et Z du repère R. Typiquement, cette source 104 est réalisée à l'aide de bobines enroulées, respectivement, autour de chacun des axes d'émission.

Les réflecteurs 34 à 37 sont remplacés par un ou plusieurs capteurs magnétiques triaxiales. Ici, deux capteurs magnétiques triaxiales 106 et 108 sont utilisés. Ils sont, respectivement, placés en des points A et B de la cible 6. Ici, le point A est à proximité du ventre de la cible et le point B est à proximité du cou de la cible lorsque le gilet 40 sur lequel sont fixés ces capteurs 106 et 108 est porté par la cible 6.

Chaque capteur 106, 108 comprend au moins trois axes de mesure non parallèles entre eux. Plus précisément, chaque capteur mesure la projection orthogonale du champ magnétique sur chacun de ses axes de mesure. Ainsi chaque capteur est capable de mesurer la direction et l'amplitude du champ magnétique émis par la source 104. A cet effet, comme la source 104, chaque capteur comprend généralement des bobines enroulées chacune autour d'axe respectif de mesure.

Ces capteurs 106 et 108 sont raccordés à un émetteur-récepteur 110 qui transmet les mesures réalisées par les capteurs 106 et 108 à un émetteur-récepteur 112 logé à l'intérieur de l'arme 102. L'émetteur-récepteur 110 est également porté par la cible 6. Par exemple, il est fixé sans aucun degré de liberté au gilet 40 comme les capteurs 106 et 108.

L'émetteur-récepteur 112 remplace ici l'émetteur-récepteur 32 de l'appareil 20. Cet émetteur-récepteur 112 permet également de synchroniser le fonctionnement des capteurs 106 et 108 avec le fonctionnement de la source 104.

L'émetteur-récepteur 112 comprend également un module 114 de calcul de la position et de l'orientation des points A et B dans le repère R à partir :

- des mesures des capteurs 106 et 108 reçues,
- de la direction et de l'amplitude du champ magnétique émis par la source 104, et
- d'un modèle mathématique reliant les mesures de chaque capteur 106, 108 au champ magnétique émis par la source 104.

Le fonctionnement de l'appareil 100 va maintenant être décrit plus en détail en référence au procédé de la figure 7.

Ce procédé débute par une phase 120 d'initialisation. Cette phase 120 comprend deux étapes 122 et 124. L'étape 122 est identique à l'étape 52 d'enregistrement de l'équation de la surface $S_D$. L'étape 124 est identique à l'étape 54 sauf que deux équations définissant chacune une surface, respectivement $S_{C1}$ et $S_{C2}$, sont enregistrées dans la mémoire 28. La première équation définissant la surface $S_{C1}$ est associée aux points A et B. La seconde équation définissant la surface $S_{C2}$ est associée au point B. Ces première et seconde équations comportent chacune des paramètres destinés à être remplacés par les valeurs, respectivement, des coordonnées $x_A$, $y_A$, $z_A$, $x_B$, $y_B$, $z_B$ des points A et B et les coordonnées $x_B$, $y_B$, $z_B$ du point B.

Par exemple, la surface $S_{C1}$ est un cylindre de révolution limité par deux plans parallèles, orthogonaux à son axe de révolution. L'axe de révolution passe ici par les points A et B. Le point A est situé à mi-hauteur entre ces deux plans. Le rayon de ce cylindre est typiquement compris entre 20 cm et 1 m et, de préférence, compris entre 20 cm et 60 cm. La hauteur de ce cylindre est comprise par exemple, entre 1,40 m et 1,80 m de manière à englober la cible 6.

La surface $S_{C2}$ est une sphère centrée sur le point B dont le rayon est compris entre 30 cm et 1 m, par exemple.

Après avoir été initialisé, le procédé se poursuit par une phase 126 d'utilisation. Lors d'une étape 128, la position des points A et B est mesurée à l'aide des capteurs 106 et 108, de la source 104 et du module 114. La détermination de la position des points A et B dans le repère R est réalisée de façon conventionnelle. Par exemple, de telles méthodes de détermination sont décrites dans la demande de brevet EP 1 502 544 ou dans le brevet déposé sous le N° FR 09 57 205.

Ensuite, lors d'une étape 130, le calculateur 30 acquiert les mesures de la position des points A et B. Dans ce mode de réalisation, l'orientation de la cible est déduite des positions mesurées pour les points A et B. Lors de cette étape 130, ce calculateur recherche également l'existence d'un point d'intersection entre la surface $S_D$ et la surface $S_{C1}$ ou la surface $S_{C2}$. Cette étape 130 est par exemple identique à l'étape 64 sauf que l'étape 64 est réitérée deux fois. Une première fois pour déterminer les points d'intersection entre la surface $S_D$ et la surface $S_{C1}$ paramétré puis une seconde fois pour déterminer l'existence de points d'intersection entre la surface $S_D$ et la surface $S_{C2}$ paramétré.

Comme précédemment décrit, lors de l'étape 130, les paramètres des équations des surfaces $S_{C1}$ et $S_{C2}$ sont remplacés par les valeurs mesurées lors de l'étape 128.

Ensuite, si aucun point d'intersection n'a été trouvé, il est procédé à l'étape 66 et dans le cas contraire à l'étape 68.

La figure 8 représente un simulateur 140 de tir sur une cible mobile 142 à l'aide d'une arme factice 144. L'arme 144 est incapable de tirer un projectile ou un faisceau susceptible de causer une blessure à la cible 142 lorsque la cible 142 est un être humain. Par exemple, à cet effet, l'arme 144 ne comporte aucun mécanisme de mise à feu. Dans ce mode de réalisation, l'arme 144 est identique à l'arme 4 sauf que le mécanisme 16 de mise à feu est omis. En particulier, cette arme 144 possède l'ensemble des éléments nécessaires à la détection d'un point d'impact sur la cible 142.

Ainsi, le mécanisme 24 d'inhibition de tir est remplacé par une interface homme-machine 146 pour indiquer au tireur si la cible a été touchée et, éventuellement, d'autres informations en fonction du point d'impact détecté.

Le fonctionnement du simulateur 140 va maintenant être décrit plus en détail en référence au procédé de la figure 9. Ce procédé débute par une phase d'initialisation identique à la phase 50.

Ensuite, il se poursuit par une phase 150 d'utilisation du simulateur 140. Cette phase 150 est identique à la phase 60 sauf que les étapes 66 et 68 sont remplacées, respectivement, par des étapes 152 et 154. De plus, l'étape 64 est déclenchée uniquement lorsque le tireur appuie sur la détente 16.

Si aucun point d'impact n'a été détecté, lors de l'étape 152, cette information est communiquée au tireur par l'intermédiaire de l'interface homme-machine 146. Par exemple, un signal visuel ou un signal sonore lui indique que la cible 142 a été manquée. Cette information peut également être communiquée au tireur par l'absence de toute information relative à l'existence d'un point d'impact transmise par l'intermédiaire de l'interface homme-machine 146.

Lorsque l'existence d'au moins un point d'impact a été trouvée, lors de l'étape 154, l'interface homme-machine 146 indique au tireur que la cible a été touchée. De plus, l'interface homme-machine peut également indiquer un nombre de points correspondants. Typiquement, le nombre de points varie en fonction de la surface $S_C$ touché et, de préférence, en fonction de la position du point d'impact sur cette surface. Par exemple, un nombre de points plus important est associé à un tir dont la trajectoire passe au centre ou à proximité du centre de la surface $S_C$, tandis qu'un nombre de points inférieur est associé à un tir dont la trajectoire traverse la surface $S_C$ mais à une distance éloignée de son centre.

De nombreux autres modes de réalisation sont possibles. Par exemple, l'arme peut être une arme automatique, une arme semi-automatique ou une arme coup par coup. L'arme peut tirer des projectiles ou un faisceau tel qu'un faisceau laser.

Le mécanisme de mise à feu peut être réalisé différemment. Par exemple, il peut être réalisé à l'aide d'un percuteur pour déclencher la déflagration du mélange détonant en réponse à un choc.

Le capteur de position peut être réalisé différemment. Par exemple, plus de quatre réflecteurs peuvent être utilisés. Les réflecteurs peuvent être également remplacés par des émetteurs d'ondes électromagnétiques reçues par l'émetteur-ré récepteur 32 logé dans l'arme. Dans ce cas, de préférence, les quatre émetteurs émettent quatre ondes électromagnétiques différentes au même instant de sorte que le module de calcul de temps de parcours peut identifier chaque émetteur. La synchronisation temporelle entre les émetteurs et le récepteur est par exemple réalisée à l'aide d'un codage particulier des ondes électromagnétiques émises.

La cible n'est pas nécessairement un être humain. Il peut s'agir par exemple d'un véhicule ou d'un autre objet mobile équipé des éléments nécessaires pour détecter un point d'impact sur cet objet.

Il peut aussi exister plusieurs cibles mécaniquement indépendantes les unes des autres sur lesquelles il faut détecter un point d'impact. Dans ce cas, par exemple, ce qui a été décrit précédemment est réalisé pour chacune de ces cibles.

En réponse à la détection d'un point d'impact d'autres actions que celles précédemment illustrées peuvent être déclenchées. Par exemple, l'arme est équipée d'une alarme propre à générer un son directement perceptible par le tireur lorsqu'elle est déclenchée. Cette alarme est déclenchée en réponse à la détection d'un point d'impact.

A l'inverse, si l'on souhaite limiter les effets collatéraux causés par une arme, le mécanisme d'inhibition de tir est par défaut dans l'état actif sauf lorsqu'un point d'impact est détecté sur la cible.

Le repère dans lequel est mesurée la position n'est pas nécessairement lié à l'arme ou à la cible. Dans le cas d'un repère mécaniquement indépendant de l'arme et de la cible, un capteur de position de la cible dans ce repère et un capteur de position et d'orientation de la ligne de visée dans ce repère sont prévus.

La surface $S_C$ peut prendre toutes formes appropriées pour protéger la cible. En particulier, la surface $S_C$ ne délimite pas nécessairement un volume. Par exemple, la surface $S_C$ peut être un plan derrière lequel se cache la cible.

Cette surface $S_C$ n'est pas nécessairement constante. Par exemple, cette surface peut être modifiée en fonction de la distance qui sépare plusieurs points fixés sur la cible et dont les positions sont mesurées.

Le ou les points de la cible dont les positions sont mesurées ne sont pas nécessairement recouverts par la surface $S_C$. Par exemple, la hauteur du cylindre défini à partir des positions des points A et B dans le mode de réalisation de la figure 6 peut être inférieure à la distance qui sépare ces points A et B.

La surface $S_C$ peut être associée à un ou plusieurs points de la cible. Par exemple, si la surface $S_C$ est une ellipse, elle est de préférence associée à deux points de la cible et l'équation de cette surface est paramétrée avec les coordonnées mesurées pour ces deux points.

Les procédés décrits précédemment s'appliquent également au cas où les positions de N points de la cible sont mesurées, où N est un entier supérieur à deux ou six. Par exemple, la position de chacun de ces points est utile pour définir une ou plusieurs surfaces $S_{Cj}$, où l'indice j identifie une surface recouvrant tout ou partie de la cible.

Dans une variante simplifiée, la surface $S_D$ est remplacée par une simple trajectoire. Dans d'autres variantes, d'autres formes qu'un cylindre de révolution sont utilisées telles que par exemple, un cylindre dont la section transversale est rectangulaire.

Il est aussi possible d'avoir plusieurs surfaces $S_{cj}$ emboîtées les unes à l'intérieur des autres, où l'indice j identifie une surface recouvrant tout ou partie de la cible. Dans ce cas, lorsqu'une intersection uniquement avec la surface la plus large est trouvée, un signal alerte le tireur. Par contre, si une intersection avec la surface la plus petite est trouvée, l'inhibition du tir est automatiquement activée. Cela permet notamment de mettre en place une graduation dans l'alerte. De préférence, les équations des surfaces $S_{cj}$ sont paramétrées à partir de la même position mesurée de la cible.

De préférence, les surfaces $S_D$ et $S_C$ sont indépendant de la distance qui sépare la cible de l'arme.

La recherche d'un point d'intersection peut aussi être implémentée du côté de la cible.

La recherche peut également être rendue plus rapide grâce à des approximations. Par exemple, il n'est pas nécessaire de trouver tous les points d'intersection mais un seul point d'intersection avec la surface $S_C$. Il est aussi possible de rechercher les points d'intersection entre les volumes délimités par les surfaces $S_C$ et $S_D$.

Les équations et notamment celle de la surface $S_D$ peuvent comporter des paramètres supplémentaires. Par exemple, l'équation de la surface $S_D$ peut comprendre des paramètres supplémentaires destinés à être remplacés par des valeurs fonction de la direction du champ de gravité terrestre. Pour remplacer ces paramètres par des valeurs, l'arme est par exemple équipée d'un accéléromètre qui mesure l'inclinaison de la ligne de visée par rapport à un plan perpendiculaire à la force de gravité. Une telle variante permet d'appliquer ce qui a précédemment été décrit au cas des trajectoires balistiques. Dans le cas d'une trajectoire balistique, la génératrice du cylindre n'est pas une droite. Dans cette description, un cylindre est défini par le déplacement d'une figure plane centrée sur la trajectoire et contenue, en tout point de la trajectoire, dans un plan perpendiculaire à la tangente en ce point à la trajectoire. Par exemple, la figure plane est un cercle.

**Revendications**

1. Procédé de détection d'un point d'impact d'un projectile ou d'un faisceau, tiré par une arme légère, sur une cible réelle mobile, une arme légère étant une arme pouvant être portée et utilisée par un seul être humain, **caractérisé en ce que** ce procédé comprend :

   a) l'enregistrement (54 ; 124) d'une première équation définissant une surface finie prédéterminée $S_C$ apte à recouvrir au moins une partie de la cible, cette première équation contenant des paramètres destinés à être remplacés par des valeurs fonction des coordonnées d'un point de la cible dans un repère à trois dimensions,
   b) l'enregistrement (52 ; 122) d'une seconde équation définissant, dans le même repère, la trajectoire du projectile ou du faisceau tiré par l'arme légère ou un cylindre $S_D$ centré sur cette trajectoire,
   c) la mesure (62 ; 128) des coordonnées du point de la cible dans le repère, à partir du temps de parcours d'ondes électromagnétiques modulées selon la technologie UWD (Ultra Wideband) ou à partir de mesure d'un

EP 2 570 761 A1

champ magnétique par un ou plusieurs capteurs magnétiques triaxiales, à l'aide d'un capteur électronique dont au moins une partie est portée par la cible,

d) la recherche (64 ; 130) d'un point d'intersection entre la surface S$_C$ et la trajectoire du projectile ou du faisceau, ou entre les surfaces S$_C$ et S$_D$, en utilisant la seconde équation enregistrée et la première équation enregistrée dans laquelle les paramètres sont remplacés par des valeurs fonctions des coordonnées mesurées du point de la cible, et

e) l'indication (68 ; 154) de l'existence d'un point d'impact si au moins un point d'intersection a été trouvé et, dans le cas contraire, l'indication (66 ; 152) de l'absence de point d'impact.

2.   Procédé selon la revendication 1, dans lequel :

- la première équation comporte des seconds paramètres destinés à être remplacés par des valeurs fonctions de l'orientation de la cible dans le même repère,
- la mesure de cette orientation de la cible à l'aide d'un capteur électronique dont au moins une partie est portée par la cible,
- lors de la recherche (130) d'un point d'intersection, les seconds paramètres de la première équation sont remplacés par des valeurs fonction de l'orientation mesurée de la cible.

3.   Procédé selon l'une quelconque des revendications précédentes, dans lequel le repère est lié, sans aucun degré de liberté, à l'arme.

4.   Procédé de détection d'un point d'impact d'un projectile ou d'un faisceau, tiré par une arme légère, sur une cible réelle mobile, une arme légère étant une arme pouvant être portée et utilisée par un seul être humain, **caractérisé en ce que** ce procédé comporte :

a) l'enregistrement (84) d'une première équation définissant une surface finie prédéterminée S$_C$ apte à recouvrir au moins une partie de la cible dans un repère à trois dimensions,
b) l'enregistrement (82) d'une seconde équation définissant, dans le même repère, la trajectoire du projectile ou du faisceau tiré par l'arme légère ou un cylindre S$_D$ centré sur cette trajectoire, cette seconde équation comportant des premiers paramètres destinés à être remplacés par des valeurs fonction de la position de l'arme et des seconds paramètres destinés à être remplacés par des valeurs fonction de la direction de la ligne de visée de l'arme,
c) la mesure (88) de la position de l'arme et de la direction de la ligne de visée de l'arme dans le repère à trois dimensions, à partir du temps de parcours d'ondes électromagnétiques modulées selon la technologie UWD (Ultra Wideband) ou à partir de mesure d'un champ magnétique par un ou plusieurs capteurs magnétiques triaxiales, à l'aide d'un capteur électronique dont au moins une partie est portée par la cible,
d) la recherche (90) d'un point d'intersection entre la surface S$_C$ et la trajectoire du projectile ou du faisceau ou entre les surfaces S$_C$ et S$_D$, en utilisant la première équation et la seconde équation dans laquelle les premiers et seconds paramètres sont remplacés par des valeurs fonction, respectivement, de la position mesurée et de la direction mesurée,
e) l'indication (68) de l'existence d'un point d'impact si au moins un point d'intersection est trouvé, et, dans le cas contraire, l'indication (66) de l'absence de point d'impact.

5.   Procédé selon la revendication 4, dans lequel le repère est lié sans aucun degré de liberté à la cible.

6.   Procédé selon l'une quelconque des revendications précédentes, dans lequel les étapes a) à e) sont réitérées pour N points différents de la même cible, où N est un nombre entier supérieur ou égal à deux.

7.   Procédé de protection d'une cible mobile réelle contre des tirs, ce procédé comportant :

- la détection (64 ; 90 ; 130) d'un point d'impact d'un projectile ou d'un faisceau susceptible d'être tiré par une arme légère sur cette cible avant de déclencher le tir, une arme légère étant une arme pouvant être portée et utilisée par un seul être humain,
- en réponse à la détection d'un point d'impact, l'inhibition systématique (68) du tir de l'arme et, dans le cas contraire, le tir n'est pas systématiquement inhibé,
**caractérisé en ce que** la détection est réalisée selon un procédé de détection conforme à l'une quelconque des revendications 1 à 6.

8. Procédé de simulation de tir sur une cible réelle mobile, ce procédé comportant :

- la détection (64) d'un point d'impact d'un projectile ou d'un faisceau simulé tiré par une arme légère au moment du déclenchement du tir, une arme légère étant une arme pouvant être portée et utilisée par un seul être humain, et
- en réponse à la détection d'un point d'impact, l'indication (154) via une interface homme-machine au tireur que le tir a touché sa cible et, dans le cas contraire, l'absence d'indication au tireur de l'existence d'un point d'impact sur la cible, **caractérisé en ce que** la détection est réalisée selon un procédé de détection conforme à l'une quelconque des revendications 1 à 6.

9. Support (28) d'enregistrement d'informations, **caractérisé en ce qu'**il comporte des instructions pour la mise en oeuvre d'un procédé conforme à l'une quelconque des revendications précédentes, lorsque ces instructions sont exécutées par un calculateur électronique.

10. Arme légère pour la mise en oeuvre d'un procédé conforme à l'une quelconque des revendications 1 à 3 et 6, **caractérisée en ce que** cette arme comporte :

- une mémoire (28) contenant :

• une première équation définissant une surface finie prédéterminée $S_C$ apte à recouvrir au moins une partie de la cible, cette première équation contenant des paramètres destinés à être remplacés par des valeurs fonction des coordonnées d'un point de la cible dans un repère à trois dimensions,
• une seconde équation définissant, dans le même repère, la trajectoire d'un projectile ou d'un faisceau tiré par l'arme ou un cylindre $S_D$ centré sur cette trajectoire,

- un calculateur électronique (30) programmé pour :

• acquérir des coordonnées mesurées du point de la cible,
• rechercher un point d'intersection entre la surface $S_C$ et la trajectoire du projectile ou du faisceau, ou entre les surfaces $S_C$ et $S_D$, en utilisant la seconde équation enregistrée et la première équation enregistrée dans laquelle les paramètres sont remplacés par des valeurs fonction des coordonnées acquises du point de la cible,
• indiquer l'existence d'un point d'impact si au moins un point d'intersection est trouvé, et, dans le cas contraire, indiquer l'absence de point d'impact.

11. Équipement de cible pour la mise en oeuvre d'un procédé conforme à l'une quelconque des revendications 4 à 6, **caractérisé en ce que** cet équipement comporte :

- une mémoire (28) contenant :

• une première équation définissant une surface finie prédéterminée $S_C$, apte à recouvrir au moins une partie de la cible, dans un repère à trois dimensions,
• une seconde équation définissant dans le même repère la trajectoire d'un projectile ou d'un faisceau tiré par l'arme ou un cylindre $S_D$ centré sur cette trajectoire, cette seconde équation comportant des premiers paramètres destinés à être remplacés par des valeurs fonction de la position de l'arme et des seconds paramètres destinés à être remplacés par des valeurs fonction de la direction de la ligne de visée de l'arme,

- un calculateur électronique (30) programmé pour :

• acquérir la position de l'arme et la direction de sa ligne de visée,
• rechercher un point d'intersection entre la surface $S_C$ et la trajectoire du projectile ou du faisceau ou entre les surfaces $S_C$ et $S_D$, en utilisant la première équation et la seconde équation dans laquelle les premiers et seconds paramètres sont remplacés par des valeurs fonction, respectivement, de la position et de la direction acquises,
• indiquer l'existence d'un point d'impact si au moins un point d'intersection est trouvé et, dans le cas contraire, indiquer l'absence de point d'impact.

Fig. 1

Fig. 2

Fig. 3

Fig. 4

Fig. 5

Fig. 6

Fig. 7

Fig. 8

Fig. 9

**EP 2 570 761 A1**

Europäisches
Patentamt

European
Patent Office

Office européen
des brevets

## RAPPORT DE RECHERCHE EUROPEENNE

Numéro de la demande

EP 12 18 4566

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | US 4 218 834 A (ROBERTSSON HANS R [SE]) 26 août 1980 (1980-08-26) | 9-11 | INV. F41A17/08 F41J5/00 |
| Y | * colonne 1, ligne 6-12 * * colonne 2, ligne 52-58 * * colonne 3, ligne 60 - colonne 15, ligne 60 * * colonne 17, ligne 6 - colonne 18, ligne 8 * * figures 1, 2, 5, 7, 8, 10, 11 * ----- | 1-8 | |
| Y | Wikipedia: "Ultra-Wideband", , 5 mai 2011 (2011-05-05), XP002687958, Extrait de l'Internet: URL:http://en.wikipedia.org/w/index.php?title=Ultra-wideband&oldid=427609816 [extrait le 2012-11-23] * la section "Applications" * ----- | 1-8 | |
| Y,D | EP 1 502 544 A1 (BIOSENSE WEBSTER INC [US]) 2 février 2005 (2005-02-02) * alinéas [0016], [0025] * * figure 1 * ----- | 1-8 | DOMAINES TECHNIQUES RECHERCHES (IPC) F41J F41A |
| Y,D | FR 2 790 547 A1 (HUMBERT GEORGES [FR]) 8 septembre 2000 (2000-09-08) * page 4, ligne 28 - page 5, ligne 26 * * figures 1, 3, 4, 5 * ----- | 7 | |
| A | EP 1 688 697 A1 (KRAUSS MAFFEI WEGMANN GMBH & C [DE]) 9 août 2006 (2006-08-09) * alinéas [0001], [0009], [0013], [0014], [0019], [0033], [0034] * * figures 1, 3 * ----- | 1-11 | |

Le présent rapport a été établi pour toutes les revendications

| Lieu de la recherche | Date d'achèvement de la recherche | Examinateur |
|---|---|---|
| La Haye | 26 novembre 2012 | Van Leeuwen, Erik |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

13

**ANNEXE AU RAPPORT DE RECHERCHE EUROPEENNE
RELATIF A LA DEMANDE DE BREVET EUROPEEN NO.**

EP 12 18 4566

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-11-2012

| Document brevet cité au rapport de recherche | | Date de publication | Membre(s) de la famille de brevet(s) | | Date de publication |
|---|---|---|---|---|---|
| US 4218834 | A | 26-08-1980 | AT | 363823 B | 10-09-1981 |
| | | | AU | 521339 B2 | 25-03-1982 |
| | | | AU | 4469279 A | 06-09-1979 |
| | | | BE | 874571 A1 | 02-07-1979 |
| | | | CA | 1129551 A1 | 10-08-1982 |
| | | | CH | 643054 A5 | 15-05-1984 |
| | | | DE | 2907590 A1 | 06-09-1979 |
| | | | DK | 84779 A | 03-09-1979 |
| | | | FR | 2418916 A1 | 28-09-1979 |
| | | | GB | 2018407 A | 17-10-1979 |
| | | | IT | 1163964 B | 08-04-1987 |
| | | | JP | 1321475 C | 11-06-1986 |
| | | | JP | 54125900 A | 29-09-1979 |
| | | | JP | 60049840 B | 05-11-1985 |
| | | | NL | 7901675 A | 04-09-1979 |
| | | | NO | 790723 A | 04-09-1979 |
| | | | SE | 425819 B | 08-11-1982 |
| | | | SE | 7802350 A | 03-09-1979 |
| | | | US | 4218834 A | 26-08-1980 |
| EP 1502544 | A1 | 02-02-2005 | AT | 372721 T | 15-09-2007 |
| | | | AU | 2004203488 A1 | 17-02-2005 |
| | | | CA | 2475918 A1 | 31-01-2005 |
| | | | DE | 602004008843 T2 | 03-07-2008 |
| | | | DK | 1502544 T3 | 14-01-2008 |
| | | | EP | 1502544 A1 | 02-02-2005 |
| | | | ES | 2293172 T3 | 16-03-2008 |
| | | | HK | 1070545 A1 | 15-02-2008 |
| | | | IL | 163234 A | 30-04-2012 |
| | | | JP | 4684590 B2 | 18-05-2011 |
| | | | JP | 2005052645 A | 03-03-2005 |
| | | | KR | 20050014759 A | 07-02-2005 |
| | | | PT | 1502544 E | 29-10-2007 |
| | | | US | 2005024043 A1 | 03-02-2005 |
| FR 2790547 | A1 | 08-09-2000 | AUCUN | | |
| EP 1688697 | A1 | 09-08-2006 | DE | 102005001558 A1 | 27-07-2006 |
| | | | EP | 1688697 A1 | 09-08-2006 |

## RÉFÉRENCES CITÉES DANS LA DESCRIPTION

**Documents brevets cités dans la description**

- FR 2790547
- US 4218834 B
- EP 1688697 A1
- EP 1502544 A
- FR 0957205